# EUROPÄISCHE PATENTSCHRIFT

(11) **EP 1 573 505 B1**
(45) Veröffentlichungstag und Bekanntmachung des Hinweises auf die Patenterteilung: **19.01.2011**
(21) Anmeldenummer: 03779904.6
(22) Anmeldetag: 12.11.2003
(51) Int. Cl.: G06F 3/12

(54) **VERFAHREN, ANORDNUNG UND COMPUTERSOFTWARE ZUM BEDRUCKEN EINES TRENNBLATTES MIT HILFE EINES ELEKTROFOTOGRAFISCHEN DRUCKERS ODER KOPIERERS**
METHOD, ARRANGEMENT AND COMPUTER SOFTWARE FOR THE PRINTING OF A SEPARATOR SHEET BY MEANS OF AN ELECTROPHOTOGRAPHIC PRINTER OR COPIER
PROCEDE, ENSEMBLE ET LOGICIEL INFORMATIQUE POUR IMPRIMER UN INTERCALAIRE A L'AIDE D'UNE IMPRIMANTE OU D'UN COPIEUR ELECTROPHOTOGRAPHIQUE

(30) Priorität: 19.11.2002 DE 10253903
(43) Veröffentlichungstag der Anmeldung: 14.09.2005
(73) Patentinhaber: OCÉ Printing Systems GmbH, 85586 Poing (DE)
(72) Erfinder: TISCHLER, Karl, M., 86633 Neuburg/Donau (DE)
(74) Vertreter: Schaumburg, Thoenes, Thurn, Landskron, Eckert
(86) Internationale Anmeldenummer: PCT/EP2003/012663
(87) Internationale Veröffentlichungsnummer: WO 2004/046908

(56) Entgegenhaltungen:
- EP-A- 1 246 051
- WO-A-01/67226

## Beschreibung

Die Erfindung betrifft ein Verfahren zum Bedrucken eines Trennblattes, insbesondere mit Hilfe eines elektrofotografischen Druckers oder Kopierers. Ferner betrifft die Erfindung eine Anordnung und eine Computersoftware zum Bedrucken eines Trennblattes mit Hilfe eines elektrofotografischen Druckers oder Kopierers.

Mit Hilfe eines ersten Programmmoduls werden erste Daten erzeugt, die Informationen von auf einer Registerlasche zu druckenden Elementen eines Trennblattes enthalten. Es sind verschiedene Text- und/oder Grafikprogramme, wie z.B. Microsoft Word, Corel Draw, Illustrator, Pagemaker und QuarkXPress, bekannt, durch die die Umrisse eines Trennblattes mit Registerlasche nachgebildet und Texte auf der Registerlasche positioniert werden. Ferner sind druckerspezifische Programme, wie DigiPath der Firma Xerox, Micropress der Firma T/R-Systems und Imagesmart der Firma Heidelberger, bekannt, mit denen Trennblätter gestaltet und ein Druckdatenstrom zum Bedrucken der Trennblätter erzeugt wird.

Jedoch ist beim Bedrucken von Trennblättern mit Hilfe dieser bekannten Programme ein erheblicher manueller Aufwand beim Gestalten des Trennblattes, insbesondere beim Positionieren des Textes auf der Registerlasche des Trennblattes erforderlich. Ein Automatikbetrieb, ein sogenannter Batch-Betrieb zum Einfügen von Trennblättern in einen vorhandenen Druckdatenstrom ist nicht bekannt. Auch sind keine betriebssystemübergreifenden Lösungen bekannt, bei denen vorkonfigurierte Trennblätter zu einem späteren Zeitpunkt in einen dann vorhandenen Druckdatenstrom eingebunden werden können, wobei die Konfiguration der Trennblätter mit Hilfe einer Datenverarbeitungsanlage mit einem ersten Betriebssystem und das Einbinden der Trennblätter in einen vorhandenen Druckdatenstrom mit Hilfe einer Datenverarbeitungsanlage mit einem zweiten Betriebssystem erfolgt.

Aus dem Dokument WO 01/67226 A1 ist ein Verfahren zum Bedrucken von Trennblättern bekannt, bei dem ein "divider formating macro" Formatierungsinformationen von auf einer Registerlasche zu druckenden Elementen eines Trennblattes erzeugt, mit deren Hilfe ein "divider placement macro" einem Druckdatenstrom Druckdaten zum Erzeugen eines Druckbildes auf der Registerlasche hinzufügt und das Trennblatt zusammen mit den übrigen Teilen eines Dokuments druckt.

Aufgabe der Erfindung ist es, Verfahren, Anordnungen sowie eine Computersoftware zum Bedrucken eines Trennblattes, insbesondere mit Hilfe eines elektrofotografischen Druckers oder Kopierers, anzugeben, bei denen das Erzeugen von Druckdaten und das Bedrucken eines Trennblattes flexibel und mit geringem Bedienaufwand möglich ist.

Die Aufgabe wird für ein Verfahren zum Bedrucken eines Trennblattes, insbesondere mit Hilfe eines elektrofotografischen Druckers oder Kopierers, mit den Merkmalen des Patentanspruchs 1 gelöst. Vorteilhafte Weiterbildungen der Erfindung sind in den abhängigen Patentansprüchen angegeben.

Durch das Aufteilen der Verarbeitungsschritte zum Abarbeiten mit Hilfe eines ersten und mit Hilfe eines zweite Programmmoduls ist das Erzeugen und Konfigurieren der Druckbilder für das Trennblatt und das Weiterverarbeiten dieser Konfigurationsinformationen und das Einbinden in einen Druckdatenstrom durch zwei Datenverarbeitungsanlagen mit unterschiedlichen Betriebssystemen möglich. Das Abarbeiten der Programmmodule auf Datenverarbeitungsanlagen mit unterschiedlichen Betriebssystemen wird auch als Abarbeiten auf unterschiedlichen Plattformen bezeichnet. Insbesondere zum Abarbeiten des zweiten Programmmoduls ist keine spezielle Oberfläche erforderlich. Das zweite Programmmodul muss lediglich mit vorbestimmten Parametern aufgerufen werden, und es werden Daten zum Einbinden in den Druckdatenstrom erzeugt. Dadurch ist auch ein automatisierter Arbeitsablauf einfach zu realisieren. Die vom ersten Programmmodul erzeugten Daten werden in einer Datei gespeichert, wodurch die flexible Handhabung der ersten Daten erheblich verbessert ist.

Ein zweiter Aspekt der Erfindung betrifft eine Anordnung zum Bedrucken eines Trennblattes, insbesondere mit Hilfe eines elektrofotografischen Druckers oder Kopierers. Eine erste Datenverarbeitungsanlage arbeitet ein erstes Pro-, grammmodul ab, das erste Daten erzeugt, die zumindest Informationen zur Formatierung von auf einer Registerlasche zu druckenden Elementen zumindest eines Trennblattes enthalten. Die erste Datenverarbeitungsanlage speichert die ersten Daten in einer Datei. Eine zweite Datenverarbeitungsanlage arbeitet ein zweites Programmmodul ab, das die ersten Daten verarbeitet und die zweiten Daten erzeugt. Mit Hilfe der zweiten Daten sind einem Druckdatenstrom Druckdaten zum Erzeugen eines Druckbildes auf der Registerlasche hinzufügbar. Ein elektrofotografischer Drucker oder Kopierer bedruckt zumindest die Registerlasche des Trennblattes mit einem Druckbild.

Durch diese erfindungsgemäße Anordnung wird erreicht, dass sowohl die Anordnung, Gestaltung und Formatierung von auf der Registerlasche zu druckenden Elementen eines Trennblattes als auch das Einbinden von grafischen Elementen gemäß diesen Informationen in einem Druckdatenstrom sehr einfach und ohne aufwendige Bedienhandlungen erfolgt. Ferner ist es durch diese erfindungsgemäße Anordnung möglich, dass das Erzeugen der ersten Daten und das Verarbeiten der zweiten Daten nicht nur zu verschiedenen Zeitpunkten sondern auch mit Hilfe verschiedener Datenverarbeitungsanlagen erfolgen kann, wodurch ein sehr flexibler Arbeitsablauf zum Erzeugen ganzer Dokumente, die Trennblätter enthalten, einfach möglich ist.

Ein dritter Aspekt der Erfindung betrifft eine Computersoftware, die Befehle und Daten in codierter Form umfasst, die nach dem Laden ein Computersystem veranlassen, die erfindungsgemäßen Verfahrensschritte auszuführen.

Durch eine solche Computersoftware wird errecht, dass das Bedrucken von Trennblättern, insbesondere mit Hilfe eines elektrofotografischen Druckers oder Kopierers, sehr einfach und ohne große Bedieneingriffe einer Bedienperson möglich ist.

Ein vierter Aspekt der Erfindung betrifft ein Verfahren zum Erzeugen von Daten zum Bedrucken eines Trennblattsets, bei dem mit Hilfe eines Programmmoduls zumindest erste Daten erzeugt werden, die zumindest Informationen zur Formatierung von auf einer Registerlasche zu druckenden Elementen mindestens eines Trennblattsets sowie Daten zum Erzeugen der zu druckenden Elemente enthalten. Die erzeugten ersten Daten werden in einer Datei gespeichert.

Durch dieses Verfahren wird erreicht, dass die in der Datei gespeicherten.Daten auch zu einem späteren Zeitpunkt sowie an einem anderen Ort zum Erzeugen des Trennblattsets genutzt werden können. Ferner können mit Hilfe der in der Datei gespeicherten Daten wiederholt Trennblattsets mit denselben Druckbildern erzeugt werden, ohne dass die angegebenen Verfahrensschritte wiederholt werden müssen.

Ein fünfter Aspekt der Erfindung betrifft eine Anordnung zum Erzeugen von Daten zum Bedrucken eines Trennblattsets. Die Anordnung hat eine Datenverarbeitungsanlage, die mindestens ein Programmmodul abarbeitet, das zumindest erste Daten erzeugt, die zumindest Informationen zur Formatierung von auf einer Registerlasche zu druckenden Elementen mindestens eines Trennblattsets sowie Daten zum Erzeugen der zu druckenden Elemente enthalten. Die Datenverarbeitungsanlage speichert die erzeugten ersten Daten in einer Datei.

Mit Hilfe dieser Anordnung wird eine Datei erzeugt, die sowohl zu einem späteren Zeitpunkt als auch an einem anderen Ort zum Erzeugen von Druckbildern genutzt werden kann. Mit Hilfe der Datei können auch dieselben Druckbilder wiederholt auf gleichartige Trennblätter gedruckt werden, wodurch eine Vielzahl gleicher Trennblattsets mit Hilfe der in der Datei gespeicherten Daten erzeugt werden können.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder dem Verfahren sowie derartige weitere Anwendungen der Erfindung, wie sie darin aufgezeigt sind, als übliches derzeitiges oder künftiges Fachwissen eines zuständigen Fachmannes angesehen werden. Die Figuren zeigen Ausführungsbeispiele der Erfindung, nämlich:
- Figur 1: eine Bedienoberfläche zum Erzeugen von Informa- tionen zum Bedrucken von Trennblättern;
- Figur 2: eine Bedienoberfläche zum Erzeugen eines neuen Trennblatt-Profils;
- Figur 3a: eine Vorschau auf ein Trennblatt-Set gemäß dem in Figur 2 konfigurierten Trennblatt-Profil ge- mäß einer ersten Voreinstellung;
- Figur 3b: eine Vorschau auf ein Trennblatt-Set des in Figur 2 konfigurierten Trennblatt-Profils gemäß einer zweiten Voreinstellung;
- Figur 4: eine Bedienoberfläche zum Formatieren von Text auf einer Registerlasche;
- Figur 5a: ein Ausschnitt einer Bedienoberfläche zum auto- matischen Erzeugen von Texten, die auf die Regi- sterlaschen eines Trennblatt-Sets gedruckt wer- den;
- Figur 5b: eine Bedienoberfläche zur Auswahl eines Zahlen- bereichs, wobei die Bedienoberfläche aufgrund der Auswahl des Menüeintrags "Zahlen" über die Bedienoberfläche nach Figur 5a ausgegeben wird;
- Figur 6: eine Bedienoberfläche zum Erzeugen individueller Texte sowie zur Auswahl einer Datei, die Druck- bilder zum Bedrucken des Trennblattes enthalten;
- Figur 7: eine Bedienoberfläche zum Erzeugen von grafi- schen Elementen, die auf allen Trennblättern er- zeugt werden sollen;
- Figur 8: eine Bedienoberfläche zum Festlegen einer Ziel- datei und zum Erzeugen einer Druckbildvorschau mindestens einer Registerlasche;
- Figur 9: eine Bedienoberfläche zum Eingeben von Dateiin- formationen einer zu erzeugenden Datei mit Druckdaten;
- Figur 10: eine Bedienoberfläche zum Einfügen von Trenn- blättern in ein vorhandenes Dokument;
- Figur 11: den ersten Teil eines Ablaufplans eines ersten Programmmoduls zum Erzeugen von Daten zum Be- drucken von Trennblättern;
- Figur 12: den zweiten Teil des Ablaufplans nach Figur 11; und
- Figur 13: einen Ablaufplan zum Erzeugen von Druckdaten mit Hilfe eines zweiten Programmmoduls aus Konfigu- rationsdaten, die mit Hilfe des ersten Pro- grammmoduls erzeugt worden sind.

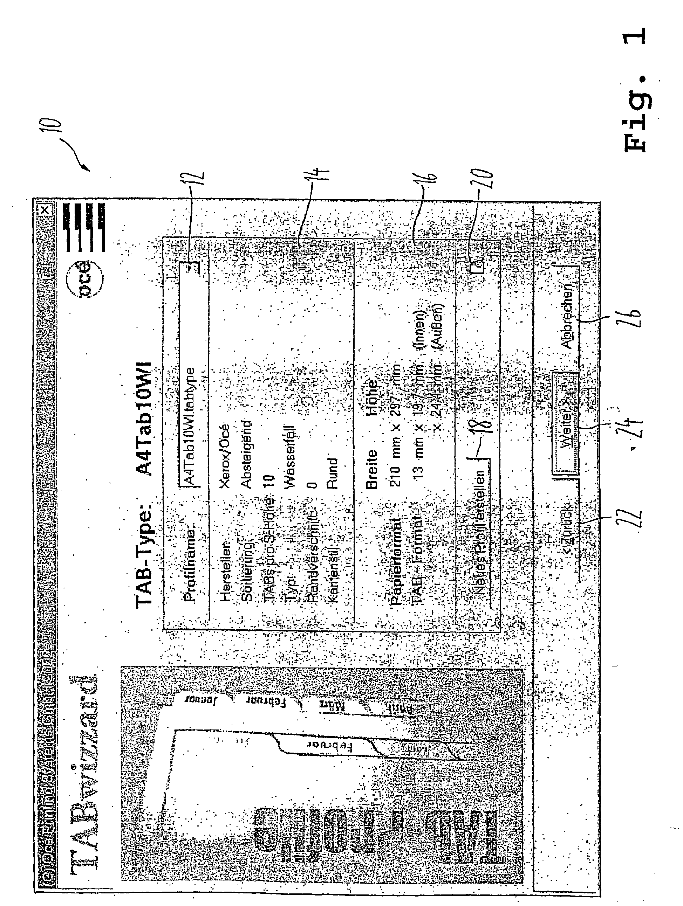

Figur 1 zeigt eine Bedienoberfläche 10, die mit Hilfe einer grafischen Benutzeroberfläche einer ersten Datenverarbeitungsanlage ausgegeben wird. Mit Hilfe der Bedienoberfläche 10 ist ein sogenanntes Trennblatt-Profil mit Hilfe eines Pull-Down-Menüs aus einer Vielzahl voreingestellter und gespeicherter Trennblatt-Profile auswählbar. Aktuell ist das Trennblatt-Profil "A4Tab10WI.tabtype" ausgewählt. Im Abschnitt 14 der Bedienoberfläche 10 sind entsprechend der Voreinstellungen des ausgewählten Profils wesentliche Einstellungen des Trennblatt-Profils, wie der Hersteller der Trennblätter, der Sortierung der Registerlaschen, die Anzahl der Registerlaschen auf der Trennblatthöhe, der Typ der Registerlaschen, der Randverschnitt und der Kantenstil des Trennblattes angegeben. Ein voreingestelltes Trennblatt-Profil betrifft vorzugsweise ein Trennblatt-Set, wobei die Registerlaschen eines Trennblatt-Sets zusammengefügt die Gesamthöhe eines Trennblattes ergeben. Einem Dokument können auch mehrere Trennblatt-Sets zugeordnet sein. Im Abschnitt 16 der Bedienoberfläche 10 ist das Papierformat des Trennblattes ohne Registerlasche und das Format einer Registerlasche angegeben.

Eine Registerlasche wird auch als Tab oder Registerfahne bezeichnet. Mit Hilfe der grafischen Funktionstaste 18 kann ein neues Profil mit Angaben, die für das derzeit ausgewählte Profil in den Abschnitten 14 und 16 enthalten sind, für ein weiteres Trennblatt-Set erzeugt werden, wobei dieses dann erstellte neue Profil den vorhandenen Trennblatt-Profilen hinzugefügt wird und über das Pull-Down-Menü 12 nachfolgend auswählbar ist. Mit Hilfe der grafischen Funktionstaste 20 ist eine Vorschau auf ein Trennblatt-Set möglich, das nach Aktivieren dieser Funktionstaste 20 in einem separaten Bildschirmfenster auf der Anzeigeeinheit, auf der auch die Bedienoberfläche 10 dargestellt ist, ausgegeben wird.

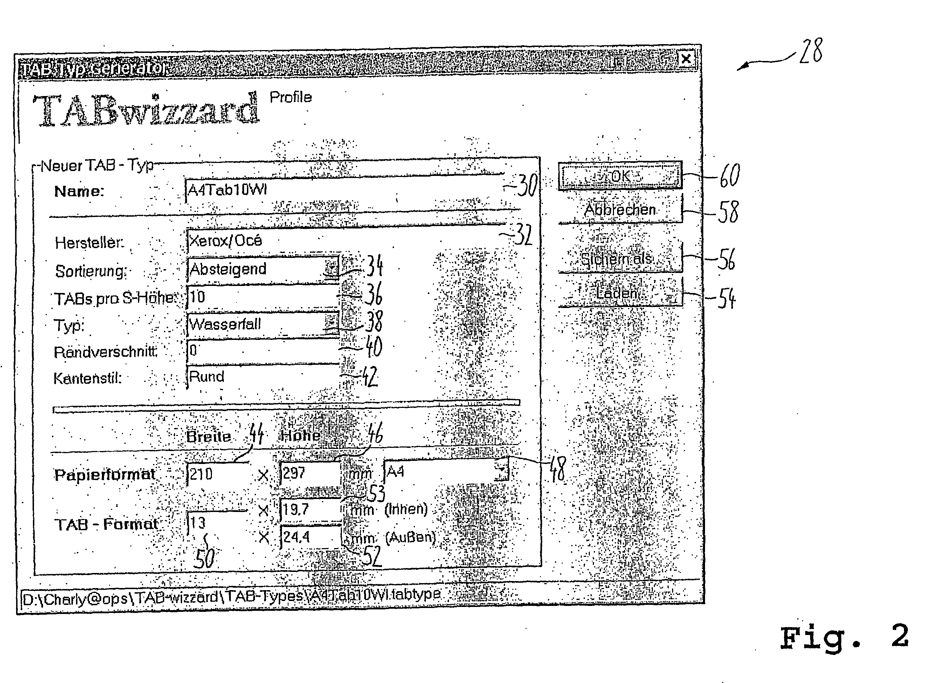

Nach dem Aktivieren der grafischen Funktionstaste 18 wird die in Figur 2 dargestellte Bedienoberfläche 28 auf der Anzeigeeinheit ausgegeben. Mit Hilfe der Bedienoberfläche 28 wird, wie bereits erwähnt, ein neues Trennblatt-Profil erzeugt. Mit Hilfe eines Ein- und Ausgabefeldes 30 wird der Name des zu erzeugenden Trennblatt-Profils eingegeben und nachfolgend angezeigt. Im Ein- und Ausgabefeld 32 wird ein Hersteller für die vorgefertigten Trennblatt-Sets eingetragen, für die das aktuelle Profil erzeugt wird. Mit Hilfe eines Pull-Down-Menüs 34 wird eine Sortierung der Registerlaschen festgelegt, wobei zwischen aufsteigender und absteigender Sortierung der Registerlaschen gewählt werden kann. Im Ein- und Ausgabefeld 36 wird die Anzahl der Registerlaschen pro Seitenhöhe festgelegt. Im Ein- und Ausgabefeld 38 wird mit Hilfe eines Pull-Down-Menüs der Trennblatttyp ausgewählt, wobei der Typ "Wasserfall" und der Typ "Einzelfahne" auswählbar ist.

Im Ein- und Ausgabefeld 40 wird der Randverschnitt der Registerlaschen und im Ein- und Ausgabefeld 42 der Kantenstil der Registerlaschen eingegeben. Mit Hilfe der Einund Ausgabefelder 44 und 46 wird das Papierformat eines Einzelblattes ohne Registerlasche als Wert in mm eingetragen. Alternativ kann mit Hilfe eines Pull-Down-Menüs 48 ein Standardpapierformat, z.B. das Papierformat A4 ausgewählt werden, wobei die zu diesem Papierformat zugeordneten Abmessungen dann in den Ein- und Ausgabefeldern 44 und 46 automatisch eingetragen werden. In den Ein- und Ausgabefeldern 50, 52, 53 werden die Abmessungen einer Registerlasche in mm angegeben. Mit Hilfe der grafischen Funktionstaste 54 wird ein über das Pull-Down-Menü 12 nach Figur 1 auswählbares Trennblatt-Profil geladen und mit Hilfe der Ein- und Ausgabefelder 30 bis 53 geändert.

Mit Hilfe der grafischen Funktionstaste 56 wird ein weiteres Bedienfeld mit einem Dialog zum Speichern des neu erstellten bzw. geänderten Trennblatt-Profils aufgerufen. Mit Hilfe der grafischen Funktionstaste 58 werden die in die Ein- und Ausgabefelder 30 bis 53 eingegebenen Änderungen verworfen und mit Hilfe der grafischen Funktionstaste 60 werden diese Änderungen bestätigt, wobei nach Aktivieren der grafischen Funktionstaste 58 oder 60 die Bedienoberfläche 58 nach Figur 2 nicht mehr durch die Anzeigeeinheit ausgegeben wird und nachfolgend die Bedienoberfläche 10 nach Figur 1 wieder angezeigt wird.

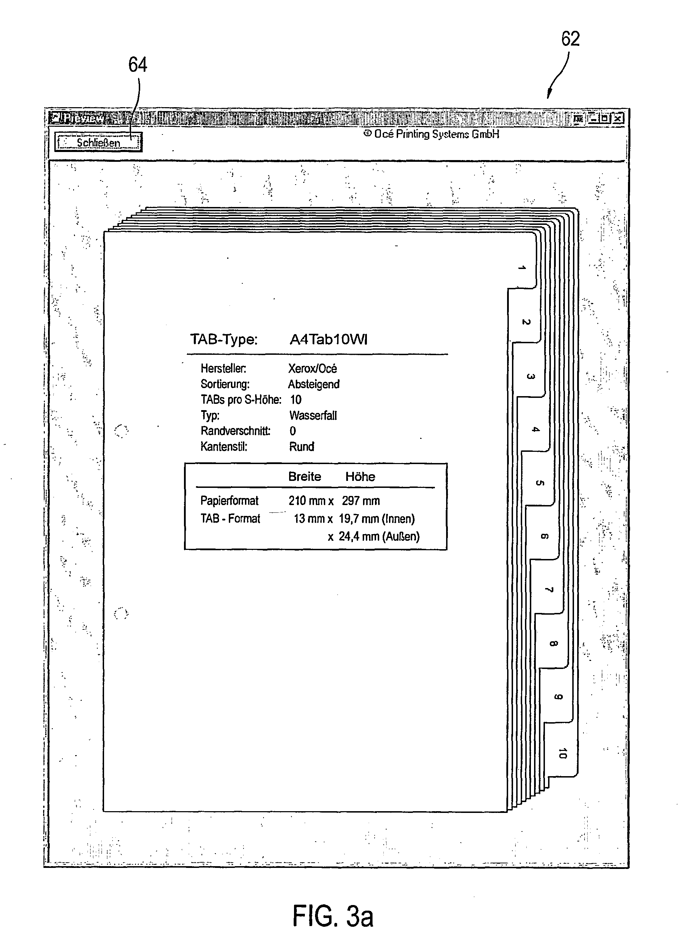

Mit Hilfe der grafischen Funktionstaste 20 der Bedienoberfläche 10 nach Figur 1 wird, wie bereits erwähnt, eine Vorschau auf ein Trennblatt-Set aktiviert. Diese Vorschau wird in einem separaten Bildschirmfenster auf der Anzeigeeinheit ausgegeben. Ein solches Bildschirmfenster 62 ist für das ausgewählte Trennblatt-Profil "A4Tab10WI.tabtype" in Figur 3a dargestellt. Das in Figur 3a gezeigte Trennblatt-Set enthält zehn Registerlaschen, wobei die Registerlaschen absteigend sortiert und gemäß dem Typ "Wasserfall" angeordnet sind. Die Registerlasche 1 hat beim Typ "Wasserfall" eine Höhe von 1/10 der Seitenhöhe von 297 mm des A4-Papierformats. Die Registerlasche 2 hat 2/10 der Höhe des Papierformats des Trennblattes, wobei die Hälfte der Höhe der Registerlasche 2 der Trennblatthöhe von der Registerlasche 1 überdeckt wird. Die Registerlasche 3 hat eine Höhe von 3/10 der Gesamthöhe des Trennblattes, wobei 2/3 der Registerlasche 3 durch die Registerlasche 2 überdeckt sind. Die nachfolgenden Registerlaschen haben jeweils eine Höhe von 1/10 der Gesamthöhe des Trennblattes zusätzlich zu der Gesamthöhe der Registerlasche des vorhergehenden Trennblattes. Die Registerlasche 10 des Trennblatt-Sets nach Figur 3a hat somit die Gesamthöhe des Trennblattes. Mit Hilfe der grafischen Funktionstaste 64 kann das Bildschirmfenster 62 geschlossen werden, wodurch keine Vorschau des Trennblatt-Sets mehr angezeigt wird.

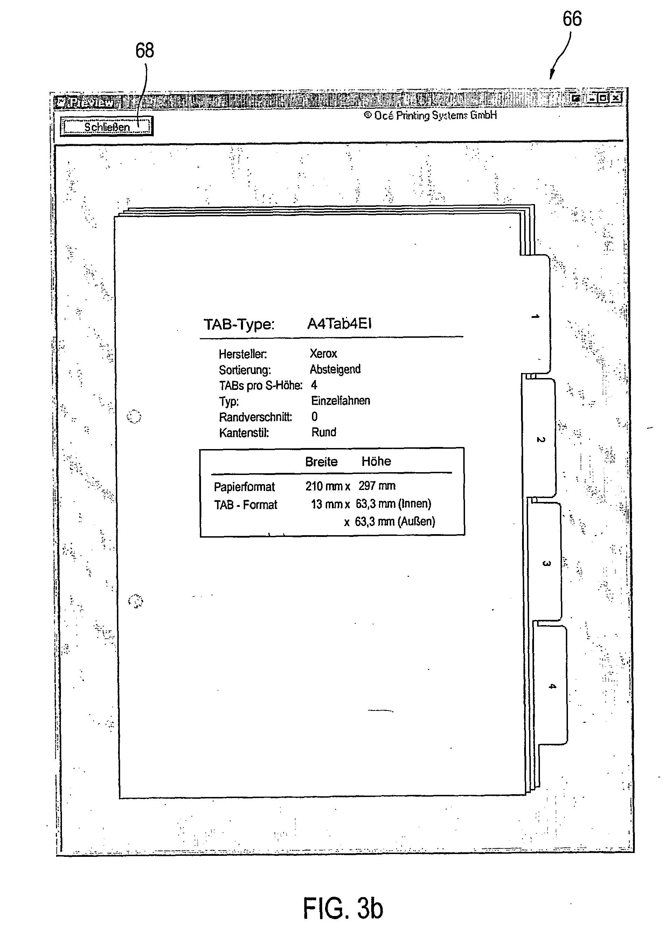

In Figur 3b ist ein Bildschirmfenster 66 mit einer Vorschau eines Trennblatt-Profils dargestellt, dessen Registerlaschen absteigend sortiert sind und das vier Einzelfahnen enthält. Ferner hat das Trennblatt-Profil nach Figur 3b einen Randverschnitt von 7 mm und eine Einstellung für runde Kartenkanten. Das Papierformat des Trennblattes ist ebenfalls das A4 Papierformat, wobei die Registerlaschen jeweils eine Höhe von 63,3 mm haben. Im Unterschied zum Typ "Wasserfall" ist beim Typ "Einzelfahnen" die Unterkante der ersten Registerlasche in gleicher Höhe des zweiten Blattes angeordnet, wie die Oberkante der zweiten Registerlasche und die Unterkante der zweiten Registerlasche ist auf der gleichen Höhe angeordnet, wie die Oberkante der dritten Registerlasche. Die Unterkante der dritten Registerlasche hat die gleiche Höhe, wie die Oberkante der vierten Registerlasche. Die Oberkante der ersten Registerlasche und die Unterkante der vierten Registerlasche haben einen Abstand zur Oberkante des Trennblattes bzw. zur Unterkante des Trennblattes von jeweils 7 mm. Mit Hilfe der grafischen Funktionstaste 68 wird das Bildschirmfenster 66 geschlossen.

Der Bedienoberfläche 10 und den weiteren nachfolgend dargestellten Bedienoberflächen wird ein Assistent zum Formatieren und Konfigurieren von Gestaltungen von Trennblättern eines oder mehrerer Trennblatt-Sets zur Verfügung gestellt. Der Assistent unterstützt eine Bedienperson bei der Konfiguration und bei der Eingabe von Daten, insbesondere zum Beschriften und zum Erzeugen von grafischen Elementen auf den Trennblättern mindestens eines TrennblattSets einschließlich der Registerlaschen des TrennblattSets. Mit Hilfe der in der grafischen Bedienoberfläche 10 enthaltenen grafischen Funktionstasten 22, 24, 26 kann zwischen einzelnen Bedienoberflächen des Assistenten gewechselt werden, wobei durch die grafische Funktionstaste 26 der Assistent beendet wird. Die grafischen Funktionstasten 22, 24, 26 sind auch in anderen Bedienoberflächen des Assistenten enthalten und nachfolgend mit den gleichen Bezugszeichen bezeichnet.

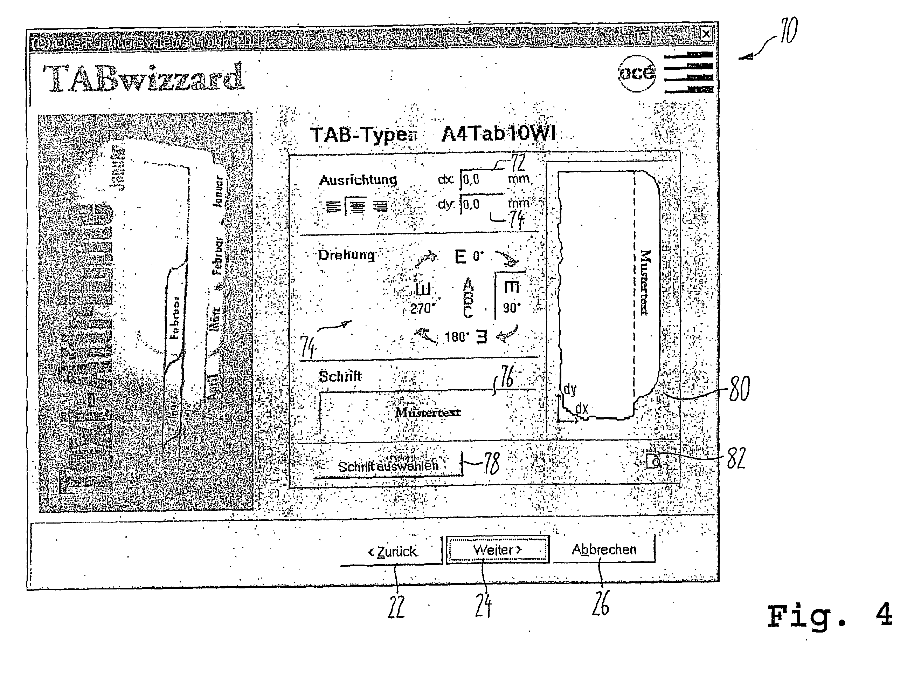

In Figur 4 ist eine Bedienoberfläche 70 zum Formatieren des auf eine Registerlasche zu druckenden Textes dargestellt. Dabei wird in einem ersten Abschnitt 72 die Ausrichtung des Textes voreingestellt, wobei zwischen rechtsbündigem, linksbündigem und zentriertem Text gewählt werden kann und mit Hilfe von Auswahlfeldern die Verschiebung des Textes in x- und y-Richtung einstellbar ist. Im Abschnitt 74 ist die Drehung des Textes auf der Registerlasche voreinstellbar. In einem dritten Abschnitt 76 wird ein Mustertext angezeigt, durch den die Zeichenformatierung des zu erzeugenden Textes auf der Registerlasche dargestellt ist. Mit Hilfe der grafischen Funktionstaste 78 kann ein Menü zum Einstellen der Zeichenformatierung des auf der Registerlasche zu erzeugenden Textes aufgerufen werden.

Nach dem Ändern der Schriftart, Schriftgröße, Darstellungsart oder Schriftfarbe wird im Abschnitt 76 dann der Mustertext in entsprechender Formatierung dargestellt. Gemäß den Einstellungen im ersten Abschnitt 72, im zweiten Abschnitt 74 und im dritten Abschnitt 76 wird eine Vorschau einer Registerlasche in einem vierten Abschnitt 80 angezeigt. Mit Hilfe der grafischen Funktionstaste 82 ist auch die Vorschau auf ein komplettes Trennblatt-Set, nämlich die Vorschau nach Figur 3a und 3b, aktivierbar.

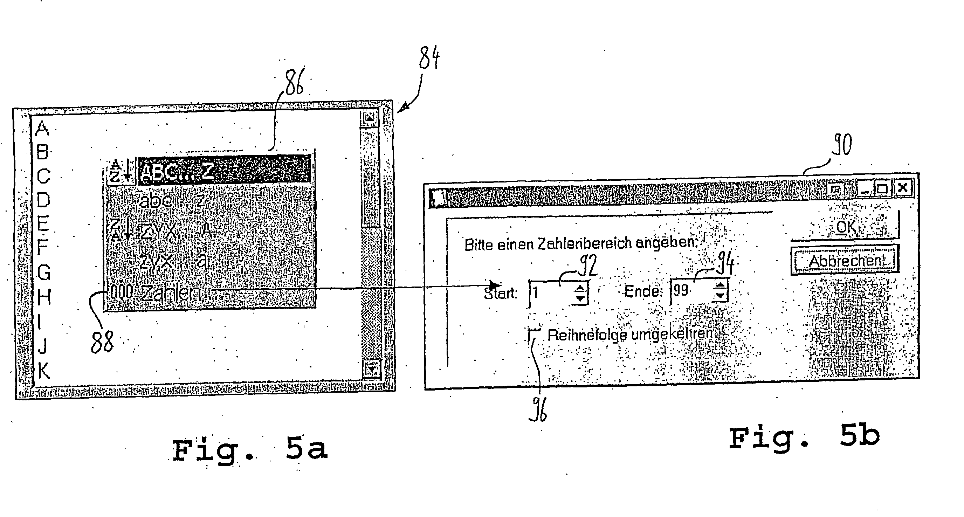

In Figur 5a ist eine Bedienoberfläche 84 dargestellt, durch die ein Text zum automatischen Beschriften auswählbar und konfigurierbar ist. Die Bedienoberfläche 84 enthält ein Auswahlfenster 86, in dem verschiedene Arten von Standardbeschriftungen der Registerlaschen auswählbar sind. So können die Registerlaschen des Trennblatt-Sets jeweils mit einem Groß- oder Kleinbuchstaben des Alphabets in absteigender oder aufsteigender Reihenfolge oder mit jeweils einer Zahl als Standardbeschriftung bedruckt werden. Wird z.B. der Menüeintrag "Zahlen" 88 ausgewählt, wird zusätzlich zur Bedienoberfläche 84 die Bedienoberfläche 90 auf der Anzeigeeinheit ausgegeben. Die Bedienoberfläche 90 enthält ein erstes Ein- und Ausgabefeld 92, in dem ein Zahlwert eintragbar ist, der auf die Registerlasche des ersten Trennblattes des Trennblatt-Sets gedruckt wird. In dem Ein- und Ausgabefeld 94 ist ein Zahlenwert eintragbar, der das Ende des Zahlenbereichs angibt, der für die Standardbeschriftung der Registerlaschen des Trennblatt-Sets bzw. mehrerer Trennblatt-Sets genutzt wird. Mit Hilfe des Kontrollkästchens 96 kann die Reihenfolge des Zahlenbereichs umgekehrt werden, so dass auf der Registerlasche des ersten Trennblattes der Zahlenwert 99 und auf der Registerlasche des letzten Trennblattes der Zahlenwert 1 gedruckt wird.

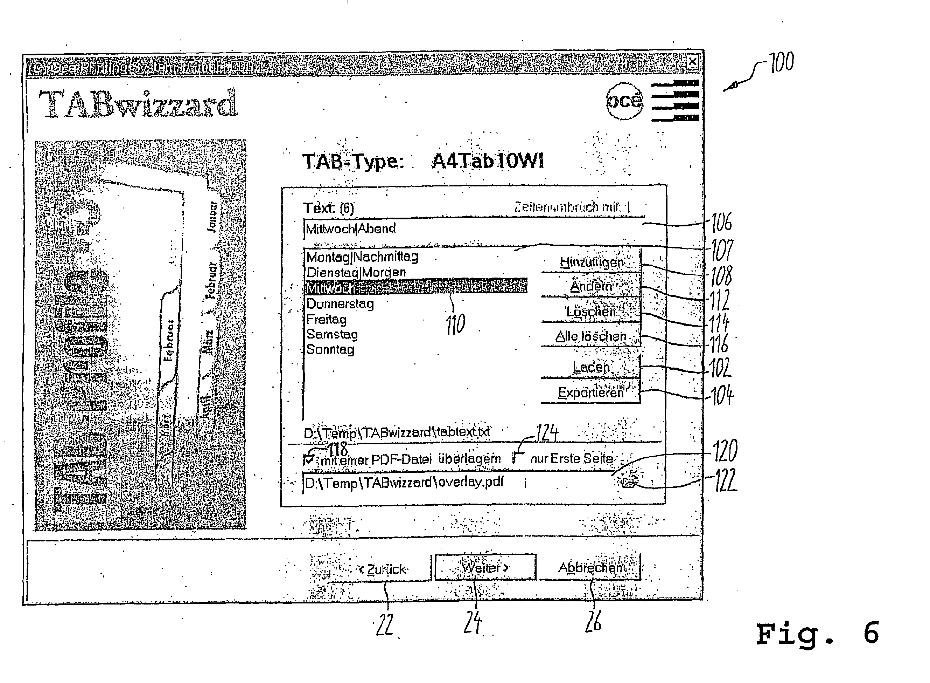

In Figur 6 ist eine Bedienoberfläche 100 dargestellt, durch die Beschriftungstexte ausgewählt und erzeugt werden, die zur Beschriftung der Registerlaschen der Trennblätter dienen. Mit Hilfe der grafischen Funktionstaste 102 wird ein Dialog zum Laden von Textdaten, die zur Beschriftung der Registerlasche dienen sollen, geöffnet und mit Hilfe der grafischen Funktionstaste 104 wird ein Dialog zum Exportieren bzw. zum Speichern von erzeugten oder geänderten Beschriftungstexten aktiviert. Vorzugsweise werden Textdateien geladen, bei denen die Texte nacheinanderfolgender Registerlaschen durch Komma getrennt sind. In ein Ein- und Ausgabefeld 106 wird ein Text eingegeben, der einer Textliste hinzugefügt werden soll. Mit Hilfe eines senkrechten Strichs bei der Eingabe wird dabei ein Zeilenumbruch erzwungen. Ein solcher Strich wird auch als "pipe" bezeichnet. In einem Anzeigefeld 107 werden die bereits eingegebenen Texte angezeigt, wobei jeweils eine Zeile einer Registerlasche zugeordnet ist und die Reihenfolge der Zeilen in dem Abschnitt 107 dann auf den Registerlaschen nacheinanderfolgender Trennblätter erzeugt wird. Durch Aktivieren der grafischen Funktionstaste 108 wird der im Eingabefeld 106 eingegebene Text der Liste unterhalb der durch eine Markierung 110 markierten Zeile eingefügt. Mit Hilfe der grafischen Funktionstaste 112 kann der Text der mit einer Markierung 110 versehenen Zeile im Feld 106 angezeigt und geändert werden. Mit Hilfe der grafischen Funktionstaste 114 wird die durch die Markierung 110 ausgewählte Zeile bzw. der ausgewählte Eintrag gelöscht. Mit Hilfe der grafischen Funktionstaste 116 werden alle im Abschnitt 107 angezeigten Texte gelöscht. Unterhalb der Liste 107 ist ein Verzeichnis auf einem Festplattenspeicher einer Datenverarbeitungsanlage sowie ein Dateiname angegeben, in dem bzw. unter dem die eingegebenen oder geänderten Daten gespeichert sind.

Mit Hilfe eines Auswahlfeldes 118, einem sogenannten Kontrollkästchen, wird durch Aktivierung des Kontrollkästchens festgelegt, dass die Trennblätter mit Druckbildern überlagert werden, die in einer Portable Document Format-Datei (PDF) gespeichert sind. Im Ein- und Ausgabefeld 120 ist der Speicherort und Dateiname der PDF-Datei ein- und ausgebbar, in der die Druckdaten von Druckbildern gespeichert sind. Mit Hilfe der grafischen Funktionstaste 122 lässt sich ein Dialog zum Durchsuchen von Datenquellen und zur Auswahl einer Datei mit den Druckbildern aktivieren. Durch Aktivieren des Kontrollkästchens 124 wird auf jedem Trennblatt das Druckbild erzeugt, das in der ausgewählten Datei der ersten Druckseite zugeordnet ist.

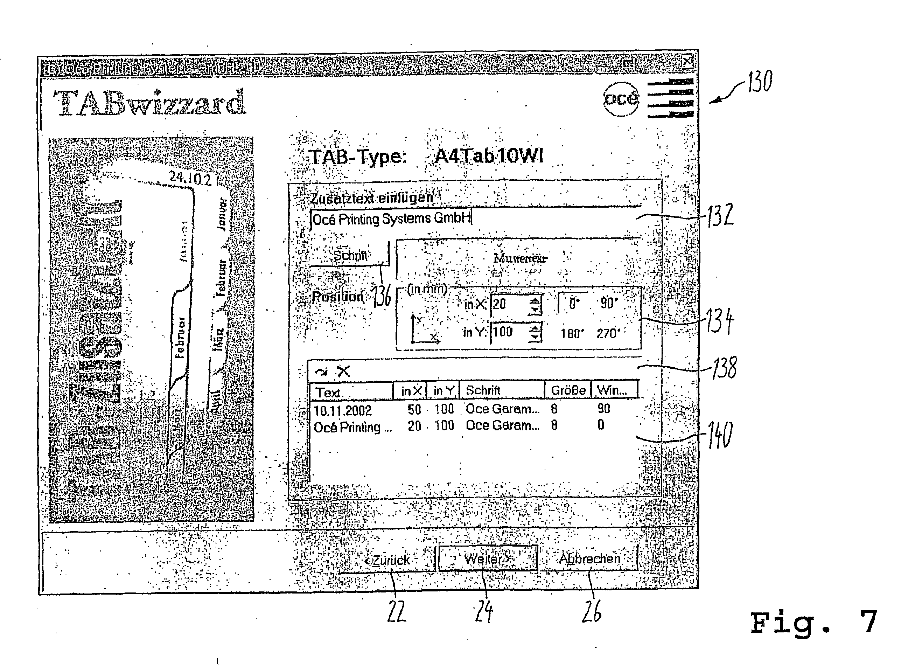

In Figur 7 ist eine Bedienoberfläche 130 dargestellt, durch die weitere grafische Elemente erzeugt und/oder ausgewählt werden, die nachfolgend auf den Trennblättern erzeugt werden. Die mit Hilfe der grafischen Bedienoberfläche 130 festgelegten grafischen Elemente werden dann auf jedem Trennblatt an der vorgestellten Position erzeugt. Im Ein- und Ausgabefeld 132 wird ein Text eingegeben, der auf jedem Trennblatt an einer Position erzeugt wird, die mit Hilfe der Einstellfelder im Abschnitt 134 der Bedienoberfläche 130 festgelegt ist.

Mit Hilfe der grafischen Funktionstaste 136 ist ein Dialog zum Festlegen der Schriftart auswählbar. Im Abschnitt 134 ist sowohl die Position als auch die Drehung des eingegebenen Textes auswählbar. Mit Hilfe einer Werkzeugleiste 136 der Bedienoberfläche 130 kann der im Ein- und Ausgabefeld 132 eingegebene Text mit den zugeordneten Positionsangaben einer Liste mit auf jedem Trennblatt zu erzeugenden Zusatztexten hinzugefügt werden. Durch Auswahl eines Textes in der Liste 140 und Aktivieren des Löschsymbols in der Werkzeugleiste 138 wird der jeweilige Zusatztext wieder aus der Liste entfernt.

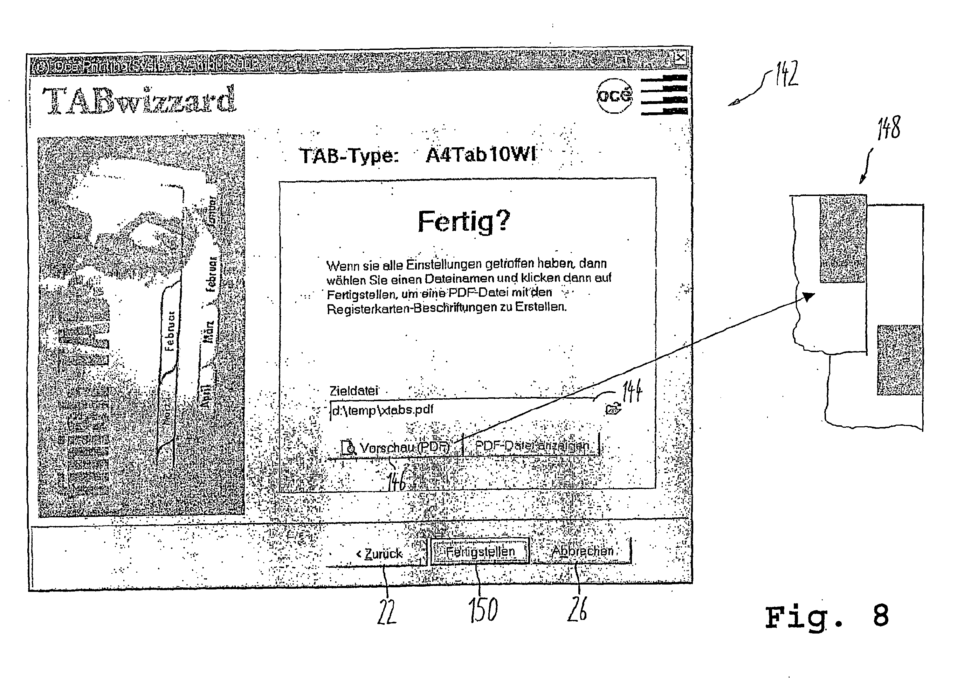

In Figur 8 ist eine Bedienoberfläche 142 dargestellt. Zum speichern der mit Hilfe der zuvor beschriebenen Bedienoberflächen vorgenommenen Einstellungen wird in einem Einund Ausgabefeld 144 der Dateiname einer Zieldatei eingegeben. In dieser Zieldatei sind dann Druckdaten in einem Portable Document Format (PDF) gespeichert. Ein solches Portable Document Format ist beispielsweise PDF der Firma Adobe. Mit Hilfe der grafischen Funktionstaste 166 ist eine Vorschau 148 der Trennblätter möglich. Mit der grafischen Funktionstaste 150 wird das Erstellen der Trennblätter mit Hilfe des Assistenten beendet und die Trennblätter sind in der ausgewählten PDF-Datei gespeichert.

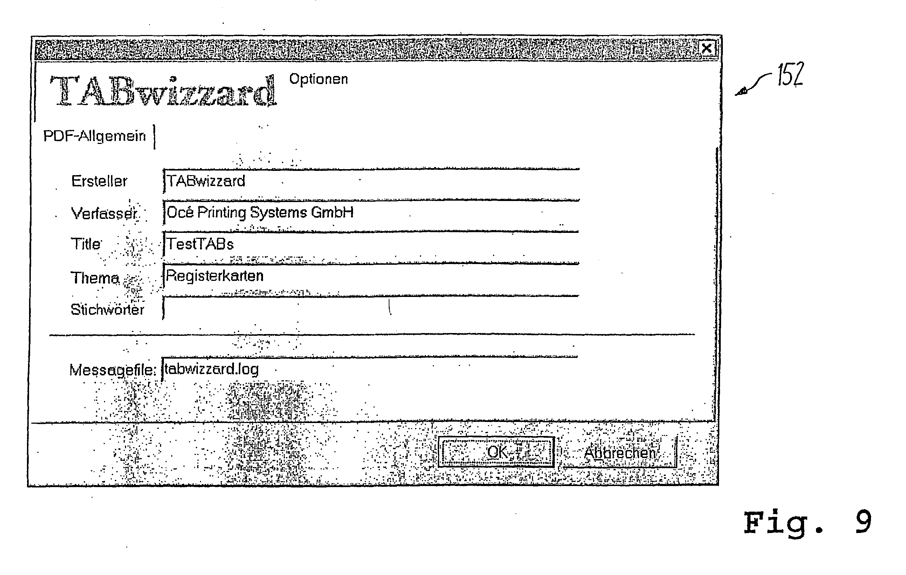

In Figur 9 ist eine Bedienoberfläche 152 dargestellt, durch die einer PDF-Datei Dateiinformationen eingegeben und zugeordnet werden. So kann z.B. der Name des Programmmoduls, der Verfasser, der Titel und das Thema sowie eine zu erzeugende Ereignisaufzeichnungsdatei, eine sogenannte Log-Datei, angegeben werden. Die Bedienoberfläche 152 kann z.B. durch Aktivieren des Ein- und Ausgabefeldes 144 in Figur 8 mit Hilfe der rechten Maustaste aktiviert werden.

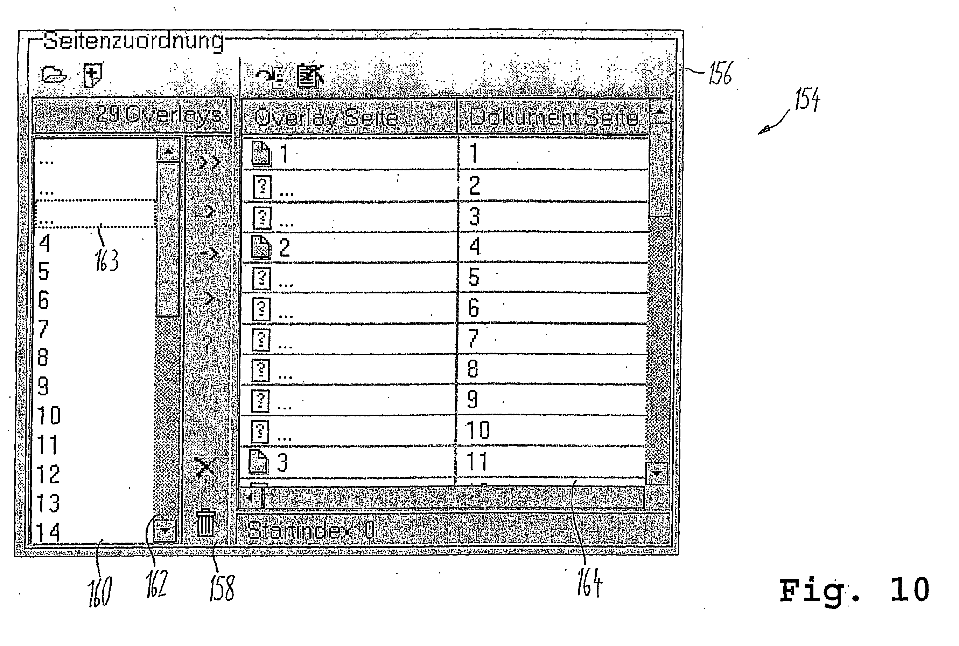

In Figur 10 ist eine Bedienoberfläche 154 dargestellt, durch die die in einer PDF-Datei enthaltenen Trennblätter einem ebenfalls als PDF-Datei vorhandenen Dokument zugeordnet und in dieses vorhandene Dokument eingefügt werden können. Die Bedienoberfläche 154 hat eine erste Werkzeugleiste 156 und eine zweite Werkzeugleiste 158. In einem ersten Anzeige- und Auswahlfeld 160 sind die in der mit Hilfe des Assistenten erzeugten Trennblätter als Seiten von 1 bis 14 dargestellt. Weitere erzeugte Trennblätter können mit Hilfe des Positionierungsbalkens 162 im Feld 160 angezeigt werden. Mit Hilfe einer Markierung 163 wird eine in das Dokument einzufügende Seite ausgewählt und mit Hilfe von Funktionstasten der zweiten Werkzeugleiste 158 an eine im Anzeige- und Auswahlfeld 164 angegebene Position eingefügt. Die Einfügeposition des dritten Trennblattes ist in der ersten Spalte des Anzeige- und Auswahlfeldes 164 an elfter Position des Gesamtdokuments. Gemäß Figur 10 wurde ein erstes Trennblatt als Seite 1 in das Gesamtdokument, ein zweites Trennblatt als Seite 4 in das Gesamtdokument und ein drittes Trennblatt als Seite 11 in das Gesamtdokument eingefügt.

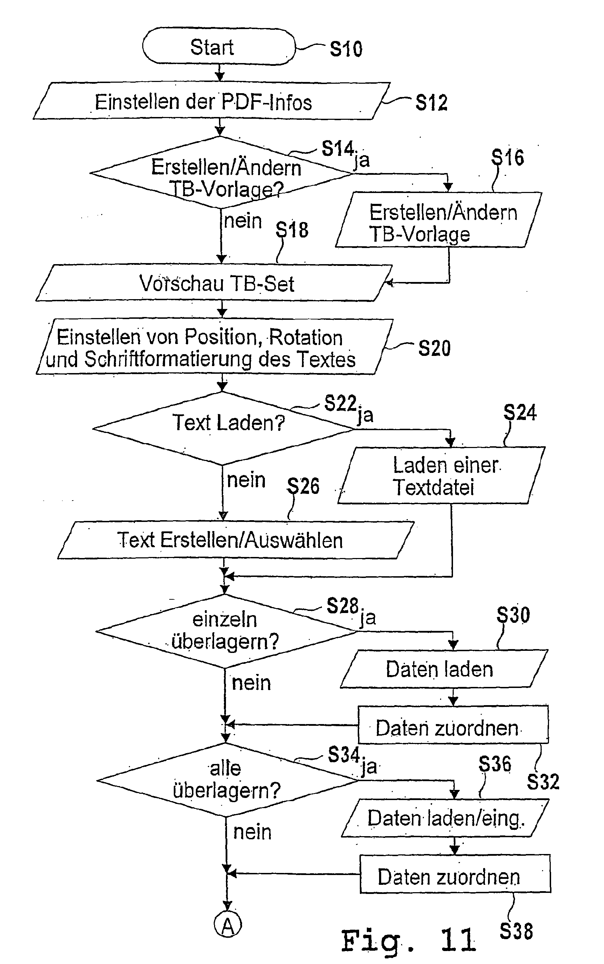

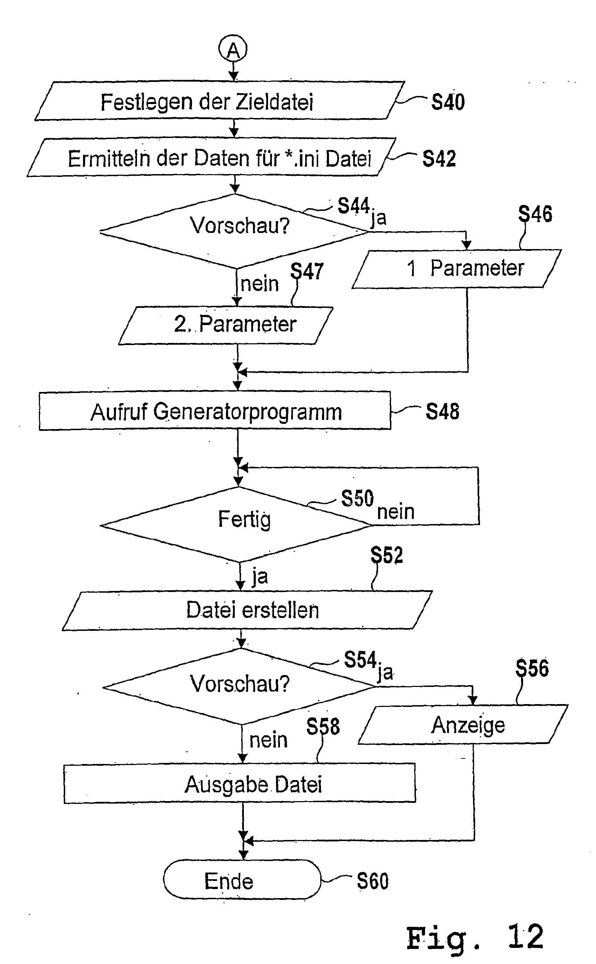

In den Figuren 11 und 12 ist ein Ablaufplan eines ersten Programmmoduls zum Erzeugen von Druckdaten für Trennblätter dargestellt. Im Schritt S10 wird der Ablauf gestartet. Im Schritt S12 werden z.B. mit Hilfe einer Bedienoberfläche nach Figur 1 Dateiinformationen einer PDF-Datei eingegeben.

Anschließend wird im Schritt S14 durch eine Bedienhandlung ausgewählt, ob eine neue Trennblattvorlage erzeugt oder eine bestehende Trennblattvorlage geändert werden soll. Ist das der Fall, so wird im Schritt S16 eine neue Trennblattvorlage erstellt bzw. eine vorhandene Trennblattvorlage geändert.

Wird durch eine Bedieneingabe im Schritt S14 jedoch ausgewählt, dass keine Trennblattvorlage erstellt oder geändert wird oder ist der Schritt S16 zum Erstellen oder Ändern einer Trennblattvorlage abgeschlossen, so erfolgt im Schritt S18 eine Vorschau auf das ausgewählte Trennblatt-Set. Anschließend wird im Schritt S20 die Position, Rotation und Schriftformatierung des auf einer Registerlasche zu erzeugenden Textes bzw. auf den auf den Registerlaschen zu erzeugenden Texten eingestellt. Anschließend wird im Schritt S22 durch eine Bedienhandlung ausgewählt, ob ein vorhandener Text geladen werden soll. Soll ein neuer Text geladen werden, so wird im Schritt S24 eine Textdatei geladen. Soll jedoch kein als Textdatei vorhandener Text geladen werden, so wird im Schritt S26 ein neuer Text erstellt oder ein Text aus Standardtexten für die Registerlaschen des Trennblatt-Sets ausgewählt.

Wurde die Textdatei im Schritt S24 geladen oder wurde im Schritt S26 ein Text erstellt oder ausgewählt, so wird anschließend im Schritt S28 mit einer Bedieneingabe ausgewählt, ob die einzelnen Trennblätter mit Druckbildern überlagert werden sollen, die in einer PDF-Datei gespeichert sind, wobei in dieser PDF-Datei die Druckdaten jeweils Druckseiten zugeordnet sind.

Sollen die Trennblätter mit weiteren Druckblättern überlagert werden, so werden im Schritt S30 die Daten aus der PDF-Datei geladen. Anschließend im Schritt S32 werden die geladenen Daten den einzelnen Trennblättern zugeordnet. Sind die Daten im Schritt S32 den einzelnen Trennblättern zugeordnet worden oder wurde im Schritt S28 ermittelt, dass die Trennblätter nicht einzeln mit Druckbildern überlagert werden sollen, so wird der Ablauf im Schritt S34 fortgesetzt. Im Schritt S34 wird überprüft, ob alle Trennblätter mit weiteren grafischen Elementen überlagert werden sollen, wobei auf jedem Trennblatt dann dieselben grafischen Elemente gedruckt werden. Ist das der Fall, so werden Daten zum Erzeugen dieser auf jeder Seite zu erzeugenden grafischen Elemente aus einer Datei geladen oder über eine Bedienoberfläche eingegeben.

Anschließend werden diese Daten im Schritt S38 jedem der Trennblätter zugeordnet. Sind die Daten im Schritt S38 den Trennblättern zugeordnet worden oder wurde im Schritt S34 festgestellt, dass die Trennblätter nicht mit weiteren Druckbildern überlagert werden sollen, so wird im Schritt S40 eine Zieldatei festgelegt, in der die Druckbilder der Trennblätter mit Hilfe einer PDF-Datei gespeichert sind. Anschließend werden im Schritt S42 Formatierungsdaten des Trennblatt-Sets ermittelt und in einer InitialisierungsDatei (Ini-Datei) gespeichert. Die Initialisierungs-Datei enthält insbesondere Formatinformationen über das Trennblatt-Set und Formatinformationen zur Positionierung und Formatierung des Textes auf den Registerlaschen des Trennblatt-Sets. Die Textdaten der Registerlaschentexte und Druckbilddaten für weitere Druckbilder, die auf den Trennblättern erzeugt werden sollen, sind vorzugsweise in separaten Dateien gespeichert, die dann zum Erzeugen der Zieldatei von einem Generatorprogrammmodul geladen und zusammen mit den in der Initialisierungs-Datei gespeicherten Informationen verarbeitet werden. Mit Hilfe der verarbeiteten Daten wird dann die Zieldatei erzeugt.

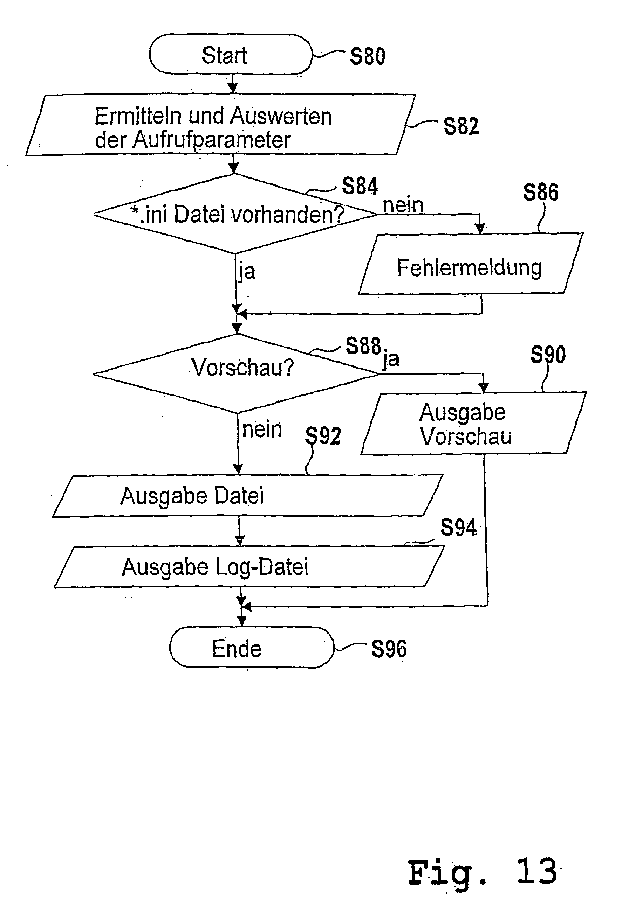

Nachfolgend wird im Schritt S44 überprüft, ob eine Vorschau des fertigen Trennblatt-Sets erzeugt werden soll. Ist das der Fall, wird anschließend im Schritt S46 ein erster Parametersatz erzeugt, mit dem anschließend im Schritt S48 ein Generatorprogrammmodul aufgerufen wird. Wird im Schritt S44 festgestellt, dass keine Vorschau erzeugt werden soll, so wird anschließend im Schritt S47 ein zweiter Parametersatz erzeugt und anschließend im Schritt S48 das Generatorprogrammmodul aufgerufen. Nach dem Schritt S48 wird im Schritt S50 überprüft, ob das Generatorprogrammmodul Daten der Zieldatei erzeugt hat. Ist das nicht der Fall, so wird der Schritt S50 wiederholt. Die Programmschritte des Generatorprogrammmoduls werden nachfolgend in Zusammenhang mit Figur 13 noch näher erläutert. Wird im Schritt S50 festgestellt, dass das Generatorprogrammmodul die Daten entsprechend der Parameter verarbeitet hat, so wird im Schritt S52 die Zieldatei erstellt. Anschließend wird im Schritt S54 überprüft, ob die in der Datei enthaltenen Daten Daten für eine Vorschauanzeige des Trennblatt-Sets oder Daten zum Bedrucken des Trennblatt-Sets enthalten. Die Daten zur Vorschau des Trennblatt-Sets enthalten neben den Daten zum Bedrucken der Trennblatt-Sets weitere Daten, durch die bei einer Vorschau auch die Umrisse der Trennblätter des TrennblattSets dargestellt werden.

Wird im Schritt S54 festgestellt, dass die Daten zur Vorschau des Trennblatt-Sets dienen sollen, so wird im Schritt S56 ein Trennblatt-Set in einer Vorschaudarstellung auf einer Anzeigeeinheit ausgegeben. Wird im Schritt S54 jedoch festgestellt, dass keine Vorschau auf das Trennblatt-Set erfolgen soll, so wird anschließend im Schritt S58 die PDF-Datei gespeichert oder zur Ausgabe mit Hilfe eines elektrofotografischen Druckers zu einem Druckserver oder direkt zu einem Drucker übertragen. Nach der Anzeige der Vorschau oder der Ausgabe der Druckdaten in den Schritten S56 bzw. S58 ist im Schritt S60 der Ablauf beendet.

In Figur 13 ist ein Ablaufplan des Generatorprogrammmoduls zum Erzeugen von Druckdaten mit Hilfe von Formatierungsinformationen dargestellt. Die Formatierungsinformationen wurden, wie bereits in Zusammenhang mit Figur 11 und 12 erläutert, mit Hilfe eines ersten Programmmoduls, vorzugsweise eines Assistentenprogrammmoduls, erzeugt. Der Ablauf wird im Schritt S80 gestartet. Anschließend wird im Schritt S82 ermittelt, mit welchen Parametern das Generatorprogrammmoduls aufgerufen worden ist. Weiterhin werden die Aufrufparameter ausgewertet. Anschließend wird im Schritt S84 überprüft, ob eine Initialisierungs-Datei vorhanden ist. Ist das nicht der Fall, so wird im Schritt S86 eine Fehlermeldung ausgegeben.

Wird im Schritt S84 ermittelt, dass eine InitialisierungsDatei vorhanden ist, so wird anschließend im Schritt S88 überprüft, ob eine Vorschau der Trennblätter erzeugt werden soll. Ist das der Fall, so werden Druckdaten mit Vorschauinformationen erzeugt und dem ersten Programmmodul nach Figur 11 und 12 im Schritt S90 übermittelt. Anschließend ist der Ablauf im Schritt S96 beendet. Wird im Schritt S88 jedoch festgestellt, dass keine Vorschau auf die Trennblätter erfolgen soll, so wird anschließend im Schritt S92 eine Datei mit seitenweise zugeordneten Druckinformationen und Druckdaten ausgegeben. Anschließend wird im Schritt S94 eine Log-Datei erzeugt und ausgegeben, in der das Erzeugen der Druckdaten zum Bedrucken der Trennblätter mit Hilfe des Generatorprogrammmoduls schrittweise dokumentiert ist. Anschließend ist im Schritt S96 der Ablauf beendet.

Durch die erfindungsgemäße Trennung von einem Programm zum Konfigurieren und Formatieren von Trennblättern, dem Erzeugen von Texten oder grafischen Elementen zum Bedrucken der Druckbilder und/oder eines Generatorprogrammmoduls zum Erzeugen von Druckdaten aufgrund der Formatierungsinformationen und der Daten der grafischen Elemente sind variable Lösungen zum Erzeugen von Trennblättern mit Hilfe verschiedener Plattformen unabhängig von vorhandenen Oberflächen einfach zu realisieren und sehr leicht an Arbeitsabläufe, dem sogenannten "workflow", anpassbar. Insbesondere das Generatorprogrammmodul ist auch für einen sogenannten Batch-Betrieb geeignet. Durch einen solchen Batch-Betrieb lassen sich automatisierte Arbeitsabläufe durch Aufruf des Generatorprogrammmoduls mit vorbestimmten Parametern sehr einfach realisieren.

Durch die in den Figuren 1 bis 10 gezeigten Bedienoberflächen ist das schnelle Erzeugen von unterschiedlichen Trennblatt-Sets mit vordefinierten oder frei konfigurierten Registerlaschen einfach möglich. Durch diese Bedienoberflächen ist eine effiziente Kontrolle jedes Arbeitsschrittes möglich. Fehler werden vermieden. Durch die angebotene Vorschau in den meisten Arbeitsschritten bzw. durch eine automatisierte Vorschau in einzelnen Arbeitsschritten ist eine Visualisierung der vorgenommenen Einstellungen jederzeit möglich, wodurch eine Bedienperson Fehleingaben sofort visuell erfassen kann. Die auf den Registerlaschen zu erzeugenden Texte können einfach ausgewählt, erzeugt und bearbeitet werden. Insbesondere ist eine Formatierung des Textes sehr einfach möglich, der auf den Registerlaschen gedruckt werden soll.

Auch ist eine kaskadierte Beschriftung der Registerlaschen mit Hilfe des ersten Programmmoduls sehr einfach möglich. Bei einer kaskadierten Beschriftung werden die Buchstaben eines Wortes untereinander angeordnet. Dadurch ist auf den relativen schmalen Registerlaschen eine Anordnung des Textes derart möglich, wodurch dieser Text dann auch bei einer Anordnung der Trennblätter im Hochformat, z.B. in Aktenordnern, einfach und schnell lesbar ist. Durch eine automatisierte Überlagerung der Trennblätter mit einer bestehenden PDF-Datei und Einfügen von zusätzlichen Textelementen kann insbesondere die übrige Trennblattfläche außerhalb der Registerlasche mit Texten und Grafiken bedruckt werden.

Mit Hilfe des erfindungsgemäßen Verfahrens, der erfindungsgemäßen Anordnung und der erfindungsgemäßen Computersoftware können somit Arbeitsabläufe zum Erstellen und Konfigurieren von Trennblättern automatisiert werden. Beim Auswählen von Trennblatt-Sets können auch verschiedene Trennblatt-Profile, insbesondere ein Wasserfall-Profil oder ein Einzelfahnen-Profil ausgewählt werden, die dann in einer Vorschau des kompletten Trennblatt-Sets entsprechend dargestellt sind. Eine Fehlauswahl wird dann einer Bedienperson sofort offensichtlich. Bei Unsicherheiten z.B. bei der Auswahl des Trennblatttyps wird einer Bedienperson durch die Vorschau eine Auswahlhilfe gegeben. Bei anderen Ausführungsbeispielen der Erfindung ist es auch möglich, Bilder und Grafiken auszuwählen, die auf den Registerlaschen gedruckt werden sollen.

Ferner kann, wie bereits beschrieben, mit Hilfe des Generatorprogrammmoduls eine originalgetreue Vorschau der auf den Trennblättern zu druckenden Druckbilder erzeugt und mit Hilfe eines Anzeigeprogramms ausgegeben werden. Durch die Aufteilung in ein Konfigurationsprogrammmodul und ein ausführendes Programm ist eine sehr flexible Weiterentwicklung und Konfiguration des gesamten Systems einfach möglich. Im vorliegenden Ausführungsbeispiel ist das ausführende Programm das Generatorprogrammmodul. Dadurch ist eine echte WYSWYG-Funktion (what you see is what you get) gegeben, durch die eine mit dem Ausdruck übereinstimmende Vorschau möglich ist. Das Generatorprogrammmodul kann, wie bereits erwähnt, auch im Batch-Betrieb ausgeführt werden. Bei einem solchen Batch-Betrieb erzeugt das Generatorprogrammmodul aufgrund der Initialisierungsdatei mit Formatinformationen Druckdaten. Das Generatorprogrammmodul kann z.B. als Unix-Script, Java-Applet oder als Pearl-Applikation ausgeführt werden. Die mit Hilfe des Generatorprogramms erzeugte PDF-Datei kann in verschiedenen Arbeitsabläufen weiterverarbeitet werden.

Die Trennblätter mit den Registerlaschen werden vorzugsweise zum Untergliedern von Gesetzes- und Verordnungswerken und bei der Untergliederung von Werbe- und Produktinformationsmappen genutzt. Weiterhin werden Trennblätter als Register für Telefonverzeichnisse und für Wörter- und Notizbücher genutzt, wobei das Nachschlagen durch diese Registerlaschen erleichtert wird.

Nachfolgend ist ein Auszug aus einer InitialisierungsDatei aufgelistet, die vom Generatorprogrammmodul verarbeitet wird und Konfigurations- und Formatierungsinformationen für ein Trennblatt-Set enthält.

```
   # Allgemeine PDF-Infos
   creator=TABwizzard
   author=Océ Printing Systems GmbH
   title=TestTABs
   subject=Registerkarten
   keywords=
   message_file=tabwizzard.log

   # Die Einstellungen zum Platzieren der TAB-Texte
   tab_Paperwidth=595
   tab_Paperheight=842
   tab_height_TB=69
   tab_height=56
   tab_width=37
   tabsPerPage=10
   tabEdge=
   move_dx=
   move_dy=
   label_rotation=270
   text_align=1
   inverse_TABS=0

   # Die zu verwendende Schrift und Schriftgröße
   FontName=Oce Garamond
   FontSize=10
   FontColor=-2147483640

   # Die intern benötigten Datei- und Verzeichnisstruktu-
   ren
   labellist_file=D:\Temp-\TABwizzard\labelslist.txt
   target_PDF=d:\temp\xtabs.pdf
   overlay-PDF=D:\Temp\TABwizzard\overlay.pdf
   overlay_single=0

   # Einzufügende Zusatztexte
    add_text1=Océ Printing Systems GmbH,30,100,Oce Gara-
    mond,8,0
    add_text2=8.11.200,10,10,Helvetica,10,90
    ...
    #=eof
```

Durch diese Auflistung der Initialisierungsinformationen, die durch das Generatorprogramm verarbeitet werden, erhält der zuständige Fachmann einen Hinweis, in welcher Form dem Generatorprogrammmodul die Formatinformationen übergeben werden. Ferner sind in den Initialisierungsdaten die Speicherorte von Textdateien, Dateien mit zu überlagernden Druckbildern sowie der Speicherort der Zieldatei enthalten.

Obgleich in den Zeichnungen und der vorhergehenden Beschreibung bevorzugte Ausführungsbeispiele aufgezeigt und detailliert beschrieben sind, sollte dies als rein beispielhaft und die Anmeldung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

### Bezugszeichenliste

- 10, 28, 70, 84, 90, 100, 130, 142, 152, 154: Bedienoberfläche
- 12: Pull-Down-Menü
- 14, 16 18, 20, 22, 24, 26, 54,:
- 56, 58, 60, 78, 82, 108, 112, 114, 116, 102, 104,:
- 122, 136, 146, 150,: Abschnitt
- 64, 68, 166 30, 32, 36, 40, 42, 44,:
- 46, 50, 52, 53, 106, 120, 132, 144: Grafische Funktionstaste Ein- und Ausgabefeld
- 34, 38, 48: Pull-Down-Menüs
- 60, 62: Anzeigefenster
- 72, 74, 76, 80: Abschnitt der Bedienoberfläche
- 86: Auswahlfenster
- 88: Menüeintrag
- 92, 94: Auswahlfeld
- 96, 118, 124: Kontrollkästchen
- 110: Auswahlbalken
- 107, 140, 160: Liste
- 134: Abschnitt der Bedienoberfläche
- 138, 156, 158: Werkzeugleiste
- 148: Vorschau
- 162: Schiebebalken
- 164: Auswahlfeld
- S10 bis S96: Verfahrensschritte

## Patentansprüche

1. Verfahren zum Bedrucken eines Trennblattes, insbesondere mit Hilfe eines elektrofotografischen Druckers oder Kopierers,
bei dem mit Hilfe eines ersten Programmmoduls (10) zumindest erste Daten erzeugt werden, die zumindest Informationen (14, 16) zur Formatierung von auf einer Registerlasche zu druckenden Elementen mindestens eines Trennblattes enthalten,
die ersten Daten in einer ersten Datei (12) gespeichert werden,
dritte Daten (110, 120) erzeugt und in einer weiteren Datei gespeichert werden, die Daten der auf der Registerlasche zu druckenden Elemente enthalten,
mit Hilfe eines zweiten Programmmoduls die in der ersten Datei (12) gespeicherten ersten Daten und die in der weiteren Datei gespeicherten dritten Daten verarbeitet werden, wobei zweite Daten (144) erzeugt werden, durch die einem Druckdatenstrom Druckdaten zum Erzeugen eines Druckbildes auf der Registerlasche hinzugefügt werden,
und bei dem zumindest die Registerlasche des einen Trennblattes durch einen Drucker oder Kopierer mit einem Druckbild bedruckt wird.

2. Verfahren nach Anspruch 1, **dadurch gekennzeichnet, dass** die dritten Daten mit Hilfe des ersten Programmmoduls erzeugt werden.

3. Verfahren nach Anspruch 1 oder 2, **dadurch gekennzeichnet, dass** die dritten Daten mit Hilfe eines dritten Programmmoduls erzeugt werden.

4. Verfahren nach einem der Ansprüche 1 bis 3, **dadurch gekennzeichnet, dass** die dritten Daten Textdaten (110) und/oder Daten von grafischen Elementen (120) enthalten.

5. Verfahren nach einem der Ansprüche 1 bis 4, **dadurch gekennzeichnet, dass** für einen ersten Druckauftrag mit Hilfe des zweiten Programmmoduls die ersten Daten und die dritten Daten verarbeitet werden, wobei die dritten Daten dem ersten Druckauftrag zugeordnet sind, und dass für einen zweiten Druckauftrag mit Hilfe des zweiten Programmmoduls die ersten Daten und vierte Daten verarbeitet werden, wobei die vierten Daten dem zweiten Druckauftrag zugeordnet sind.

6. Verfahren nach Anspruch 5, **dadurch gekennzeichnet, dass** beim Aufruf des zweiten Programmmoduls ein Dateiname (12) einer ersten Datei, in der die ersten Daten gespeichert sind, und der Dateiname der Datei, in der die dritten Daten (110, 120) gespeichert sind, bzw. der Dateiname der Datei, in der die vierten Daten gespeichert sind, als Parameter angegeben werden.

7. Verfahren nach einem der vorhergehenden Ansprüche, **dadurch gekennzeichnet, dass** fünfte Daten zum Erzeugen eines weiteren Druckbildes in zumindest einem Abschnitt des Trennblattes außerhalb der Registerlasche vom zweiten Programmmodul derart verarbeitet werden, dass dem Druckdatenstrom Druckdaten zum Erzeugen des Druckbildes hinzugefügt werden.

8. Verfahren nach einem der Ansprüche 1 bis 7, **dadurch gekennzeichnet, dass** die dritten, vierten und/oder fünften Daten durch das erste und/oder zweite Programmmodul auswählbar sind und/oder mit dessen Hilfe erzeugbar sind.

9. Verfahren nach Anspruch 7 oder 8, **dadurch gekennzeichnet, dass** die fünften Daten dem jeweiligen Druckauftrag zugeordnet sind.

10. Verfahren nach einem der vorhergehenden Ansprüche, **dadurch gekennzeichnet, dass** die ersten Daten zumindest Informationen zur Anordnung von auf Registerlaschen zu druckenden Elementen eines Trennblatt-Sets enthalten, und dass mit Hilfe des zweiten Programmmoduls zweite Daten erzeugt werden, durch die ein Druckdatenstrom Druckdaten (144) zum Erzeugen jeweils eines Druckbildes auf jeder Registerlasche des TrennblattSets hinzugefügt werden.

11. Verfahren nach Anspruch 10, **dadurch gekennzeichnet, dass** das Trennblatt-Set als Sortierhilfe für eine Loseblatt-Sammlung dient.

12. Verfahren nach einem der vorhergehenden Ansprüche, **dadurch gekennzeichnet, dass** das erste Programmmodul als Programmelement in einem Desktop Publishing-Programmmodul als Java-Applet, PlugIn-Programmmodul oder als verknüpftes Programmelement enthalten ist.

13. Verfahren nach einem der vorhergehenden Ansprüche, **dadurch gekennzeichnet, dass** im ersten Programmmodul eine Assistentenfunktion aktivierbar ist, mit der alle erforderlichen Informationen zum Erzeugen der ersten Daten aktivierbar ist.

14. Verfahren nach einem der vorhergehenden Ansprüche, **dadurch gekennzeichnet, dass** mit Hilfe des ersten Programmmoduls eine Ansicht (62, 66) des Trennblattes mit Registerlasche und/oder eines Trennblatt-Sets.mit den Registerlaschen simuliert und angezeigt wird.

15. Verfahren nach einem der vorhergehenden Ansprüche, **dadurch gekennzeichnet, dass** das zweite Programmmodul durch eine zweite Datenverarbeitungsanlage, insbesondere einem Druckerserver oder Druckvorbereitungsrechner abgearbeitet wird.

16. Verfahren nach einem der vorhergehenden Ansprüche, **dadurch gekennzeichnet, dass** die Informationen zur Formatierung Angaben zu den Abmessungen der Registerlasche, der Position der Registerlasche in einem Trennblatt-Set, dem Papierformat des Trennblattes, der Ausrichtung eines Registerlaschentextes und/oder der Zeichenformatierung des Registerlaschentextes, wie Schriftart, Schriftgröße, Schriftfarbe, Hintergrundfarbe und/oder Darstellungsart des Textes, enthält.

17. Verfahren nach einem der vorhergehenden Ansprüche, **dadurch gekennzeichnet, dass** im ersten Programmmodul eine Vorschau (62, 66) auf ein Trennblatt mit den ausgewählten Einstellungen möglich ist, wobei zu dem zweiten Programmmodul Daten mit den Einstellungen als Parameter übergeben werden, das zweite Programmmodul die erzeugten zweiten Daten zum ersten Programmmodul überträgt, und wobei das erste Programmmodul mit Hilfe eines Programmelementes die zweiten Daten (144) zu Anzeigedaten weiterverarbeitet .

18. Anordnung zum Bedrucken eines Trennblattes, insbesondere mit Hilfe eines elektrofotografischen Druckers oder Kopierers,
bei der eine erste Datenverarbeitungsanlage ein erstes Programmmodul (10) abarbeitet, das erste Daten erzeugt, die zumindest Informationen (14, 16) zur Formatierung von auf einer Registerlasche zu druckenden Elementen zumindest eines Trennblattes enthalten,
die erste Datenverarbeitungsanlage die ersten Daten in einer ersten Datei (12) speichert,
das erste Programmmodul oder ein drittes Programmmodul dritte Daten (110, 120) erzeugt und in einer weiteren Datei speichert, wobei die dritten Daten (110, 120) Daten der auf der Registerlasche zu druckenden Elemente enthalten,
eine zweite Datenverarbeitungsanlage ein zweites Programmmodul abarbeitet, das die ersten Daten und die dritten Daten (110, 120) verarbeitet und zweite Daten (144) erzeugt, wobei mit Hilfe der zweiten Daten (144) einem Druckdatenstrom Druckdaten zum Erzeugen eines Druckbildes auf der Registerlasche hinzufügbar sind,
und bei der der Drucker oder Kopierer zumindest die Registerlasche des Trennblattes mit einem Druckbild bedruckt.

19. Computersoftware, umfassend Befehle und Daten in codierter Form, die nach dem Laden der Computersoftware ein Computersystem veranlassen, die in einem der Ansprüche 1 bis 17 genannten Schritte auszuführen.

20. Computersoftware nach Anspruch 19, **dadurch gekennzeichnet, dass** die Computersoftware auf einem Speichermedium gespeichert ist.

21. Verfahren zum Erzeugen von Daten zum Bedrucken eines Trennblattsets,
bei dem mit Hilfe eines ersten Programmmoduls (10) zumindest erste Daten erzeugt werden, die zumindest Informationen (14, 16) zur Formatierung von auf einer Registerlasche zu druckenden Elementen mindestens eines Trennblattsets enthalten,
wobei die erzeugten ersten Daten in einer ersten Datei (12) gespeichert werden,
mit Hilfe des ersten Programmmoduls oder mit Hilfe eines weiteren Programmmoduls Daten (110, 120) zum Erzeugen der zu druckenden Elemente erzeugt und in einer weiteren Datei gespeichert werden.

22. Anordnung zum Erzeugen von Daten zum Bedrucken eines Trennblattsets,
mit einer Datenverarbeitungsanlage, die mindestens ein erstes Programmmodul (10) abarbeitet, das zumindest erste Daten erzeugt, die zumindest Informationen (14, 16) zur Formatierung von auf einer Registerlasche zu druckenden Elementen mindestens eines Trennblattsets enthalten,
wobei die Datenverarbeitungsanlage die erzeugten ersten Daten in einer ersten Datei (12) speichert,
das erste Programmmodul oder ein weiteres Programmmodul Daten (110, 120) zum Erzeugen der zu druckenden Elemente erzeugt und in einer weiteren Datei speichert.

## Claims

1. A method for printing a separator sheet, in particular with the aid of an electrophotographic printer or copier,
in which, with the aid of a first program module (10), at least first data are generated that contain at least information (14, 16) for formatting of elements of at least one separator sheet, which elements are to be printed on a register tab,
the first data are stored in a first data file (12), third data (110, 120) are generated and stored in a further data file, which contain data of the elements to be printed on the register tab,
with the aid of a second program module the first data stored in the first data file (12) and the third data stored in the further data file are processed, wherein second data (144) are generated via which print data for generating a print image on the register tab are added to a print data stream,
and in which at least the register tab of the one separator sheet is printed by a printer or copier with a print image.

2. The method according to claim 1, **characterized in that** the third data are generated with the aid of the first program module.

3. The method according to claim 1 or 2, **characterized in that** the third data are generated with the aid of a third program module.

4. The method according to one of the claims 1 to 3, **characterized in that** the third data contain text data (110) and/or data of graphic elements (120).

5. The method according to one of the claims 1 to 4, **characterized in that**, for a first print job, the first data and the third data are processed with the aid of the second program module, wherein the third data are associated with the first print job, and **in that**, for a second print job, the first data and fourth data are processed with the aid of the second program module, wherein the fourth data are associated with the second print job.

6. The method according to claim 5, **characterized in that** upon invocation of the second program module, a file name (12) of a first data file in which the first data are stored and the file name of the data file in which the third data (110, 120) are stored, or, respectively, the file name of the data file in which the fourth data are stored are specified as parameters.

7. The method according to one of the preceding claims, **characterized in that** fifth data for generating a further print image in at least one section of the separator sheet outside the register tab are processed by the second program module such that print data for generating the print image are added to the print data stream.

8. The method according to one of the claims 1 to 7, **characterized in that** the third, fourth and/or fifth data can be selected via the first and/or second program module and/or can be generated with the help thereof.

9. The method according to claim 7 or 8, **characterized in that** the fifth data are associated with the respective print job.

10. The method according to one of the preceding claims, **characterized in that** the first data contain at least information on the arrangement of elements of a separator sheet set, which elements are to be printed on register tabs, and **in that** with the aid of the second program module second data are generated via which print data (144) for generating respectively one print image on each register tab of the separator sheet set are added to a print data stream.

11. The method according to claim 10, **characterized in that** the separator sheet set serves as a sorting aid for a loose-leaf system.

12. The method according to one of the preceding claims, **characterized in that** the first program module is contained as a program element in a desktop publishing program module as a Java applet, plug-in program module or as a linked program element.

13. The method according to one of the preceding claims, **characterized in that** in the first program module an assistant function with which all necessary information for generating the first data can be activated.

14. The method according to one of the preceding claims, **characterized in that** with the aid of the first program module a view (62, 66) of the separator sheet with the register tab and/or of a separator sheet with the register tabs is simulated and displayed.

15. The method according to one of the preceding claims, **characterized in that** the second program module is executed by a second data processing system, in particular a print server or print pre-processing computer.

16. The method according to one of the preceding claims, **characterized in that** the information for formatting contains specifications regarding the dimensions of the register tab, the position of the register tab in a separator sheet set, the paper format of the separator sheet, the alignment of a register tab text and/or the character formatting of the register tab text such as font type, font size, font colour, background colour and/or display type of the text.

17. The method according to one of the preceding claims, **characterized in that** in the first program module a preview (62, 66) of a separator sheet with the selected settings is possible, wherein data with the settings as parameters are transferred to the second program module, the second program module transfers the generated second data to the first program module, and wherein the first program module further processes the second data (144) to display data with the aid of a program element.

18. An arrangement for printing a separator sheet, in particular with the aid of an electrophotographic printer or copier,
in which a first data processing system executes a first program module (10), which generates first data that contain at least information (14, 16) for formatting of elements of at least one separator sheet, which elements are to be printed on a register tab,
the first data processing system stores the first data in a first data file (12),
the first program module or a third program module generates third data (110, 120) and stores them in a further data file, wherein the third data (110, 120) contain data of the elements to be printed on the register tab,
a second data processing system executes a second program module which processes the first data and the third data (110, 120) and generates second data (144), wherein with the aid of the second data (144) print data for generating a print image on the register tab can be added to a print data stream,
and in which the printer or copier prints at least the register tab of the separator sheet with a print image.

19. A computer software, comprising commands and data in encoded form which, after loading the computer software, prompt a computer system to execute the steps mentioned in one of the claims 1 to 17.

20. The computer software according to claim 19, **characterized in that** the computer software is stored on a storage medium.

21. A method for generating data for printing a separator sheet set,
in which with the aid of a first program module (10) at least first data are generated which contain at least information (14, 16) for formatting of elements of at least one separator sheet, which elements are to be printed on a register tab,
wherein the generated first data are stored in a first data file (12),
with the aid of the first program module or with the aid of a further program module data (110, 120) for generating the elements to be printed are generated and stored in a further data file.

22. The arrangement for generating data for printing a separator sheet,
comprising a data processing system which executes at least a first program module (10) which generates at least first data which contain at least information (14, 16) for formatting of elements of at least one separator sheet, which elements are to be printed on a register tab,
wherein the data processing system stores the generated first data in a first data file (12),
the first program module or a further program module generates data (110, 120) for generating the elements to be printed and stores them in a further data file.

## Revendications

1. Procédé pour imprimer une feuille intercalaire, notamment à l'aide d'un appareil d'impression ou d'un copieur électrophotographique, dans lequel
au moins des premières données sont générées à l'aide d'un premier module de programme (10), lesquelles contiennent au moins des informations (14, 16) destinées au formatage d'éléments, à imprimer sur un onglet, d'au moins une feuille intercalaire,
les premières données sont mémorisées dans un premier fichier (12),
des troisièmes données (110, 120) sont générées et mémorisées dans un autre fichier, lesquelles données contiennent des éléments à imprimer sur l'onglet,
les premières données mémorisées dans le premier fichier (12) et les troisièmes données mémorisées dans l'autre fichier sont traitées à l'aide d'un deuxième module de programme, des deuxièmes données (144) étant générées, qui permettent d'ajouter des données d'impression à un flux de données d'impression afin de générer une image d'impression sur l'onglet,
et au moins l'onglet de ladite au moins une feuille intercalaire est imprimé avec une image d'impression au moyen d'un appareil d'impression ou d'un copieur.

2. Procédé selon la revendication 1, **caractérisé en ce que** les troisièmes données sont générées à l'aide du premier module de programme.

3. Procédé selon la revendication 1 ou 2, **caractérisé en ce que** les troisièmes données sont générées à l'aide d'un troisième module de programme.

4. Procédé selon l'une des revendications 1 à 3, **caractérisé en ce que** les troisièmes données contiennent des données de texte (110) et/ou des données d'éléments graphiques (120).

5. Procédé selon l'une des revendications 1 à 4, **caractérisé en ce que** les premières données et les troisièmes données sont traitées pour une première tâche d'impression à l'aide du deuxième module de programme, lesdites troisièmes données étant associées à la première tâche d'impression, et **en ce que** les premières données et des quatrièmes données sont traitées pour une deuxième tâche d'impression à l'aide du deuxième module de programme, lesdites quatrièmes données étant associées à la deuxième tâche d'impression.

6. Procédé selon la revendication 5, **caractérisé en ce que**, lors de l'appel du deuxième module de programme, un nom de fichier (12) d'un premier fichier, dans lequel les premières données sont mémorisées, et le nom du fichier dans lequel les troisièmes données (110, 120) sont mémorisées, respectivement le nom du fichier dans lequel les quatrièmes données sont mémorisées, sont donnés comme paramètres.

7. Procédé selon l'une des revendications précédentes, **caractérisé en ce que** des cinquièmes données sont traitées par le deuxième module de programme, afin de générer une autre image d'impression dans au moins une portion de la feuille intercalaire à l'extérieur de l'onglet, de sorte que des données d'impression sont ajoutées au flux de données d'impression afin de générer l'image d'impression.

8. Procédé selon l'une des revendications 1 à 7, **caractérisé en ce que** les troisièmes, quatrièmes et/ou cinquièmes données peuvent être sélectionnées par le premier et/ou le deuxième module de programme, et/ou peuvent être générées à l'aide de ceux-ci.

9. Procédé selon la revendication 7 ou 8, **caractérisé en ce que** les cinquièmes données sont associées à la tâche d'impression respective.

10. Procédé selon l'une des revendications précédentes, **caractérisé en ce que** les premières données contiennent au moins des informations destinées à disposer des éléments, à imprimer sur des onglets, d'un ensemble de feuilles intercalaires, et **en ce que** des deuxièmes données sont générées à l'aide du deuxième module de programme, lesquelles données permettent d'ajouter des données d'impression (144) à un flux de données d'impression afin de générer à chaque fois une image d'impression sur chaque onglet de l'ensemble de feuilles intercalaires.

11. Procédé selon la revendication 10, **caractérisé en ce que** l'ensemble de feuilles intercalaires sert d'auxiliaire de tri pour une édition à feuilles mobiles.

12. Procédé selon l'une des revendications précédentes, **caractérisé en ce que** le premier module de programme est contenu en tant qu'élément de programme dans un module de programme Desktop Publishing, en tant qu'Applet Java, en tant que module de programme Plug-In, ou en tant qu'élément de programme combiné.

13. Procédé selon l'une des revendications précédentes, **caractérisé en ce qu'**une fonction d'assistant peut être activée dans le premier module de programme, au moyen de laquelle toutes les informations nécessaires pour générer les premières données peuvent être activées.

14. Procédé selon l'une des revendications précédentes, **caractérisé en ce qu'**une vue (62, 66) de la feuille intercalaire comportant un onglet et/ou d'un ensemble de feuilles intercalaires comportant des onglets est simulée et affichée à l'aide du premier module de programme.

15. Procédé selon l'une des revendications précédentes, **caractérisé en ce que** le deuxième module de programme est traité par un deuxième système de traitement de données, notamment un serveur d'impression ou un ordinateur de préparation de l'impression.

16. Procédé selon l'une des revendications précédentes, **caractérisé en ce que** les informations destinées au formatage contiennent des indications relatives aux dimensions de l'onglet, à la position de l'onglet dans un ensemble de feuilles intercalaires, au format du papier de la feuille intercalaire, à l'orientation d'un texte d'onglet et/ou au formatage des caractères du texte de l'onglet, tel que le type de caractères, la taille des caractères, la couleur des caractères, la couleur de l'arrière-plan et/ou le type de représentation du texte.

17. Procédé selon l'une des revendications précédentes, **caractérisé en ce qu'**il est possible, dans le premier module de programme, d'effectuer une prévisualisation (62, 66) sur une feuille intercalaire avec les réglages choisis, des données comportant les réglages utilisés comme paramètres étant transférées vers le deuxième module de programme, le deuxième module de programme transférant les deuxièmes données générées vers le premier module de programme, et le premier module de programme poursuivant le traitement des deuxièmes données (144) à l'aide d'un élément de programme pour donner des données d'affichage.

18. Ensemble pour imprimer une feuille intercalaire, notamment à l'aide d'un appareil d'impression ou d'un copieur électrophotographique, dans lequel
un premier système de traitement de données met en oeuvre un premier module de programme (10) qui génère des premières données qui contiennent au moins des informations (14, 16) destinées au formatage d'éléments, à imprimer sur un onglet, d'au moins une feuille intercalaire,
le premier système de traitement de données mémorise les premières données dans un premier fichier (12),
le premier module de programme ou un troisième module de programme génère des troisièmes données (110, 120) et les mémorise dans un autre fichier, lesdites troisièmes données (110, 120) contenant des données des éléments à imprimer sur l'onglet,
un deuxième système de traitement de données met en oeuvre un deuxième module de programme qui traite les premières données et les troisièmes données (110, 120) et génère des deuxièmes données (144), des données d'impression pouvant être ajoutées à un flux de données d'impression à l'aide des deuxièmes données (144) afin de générer une image d'impression sur l'onglet,
et l'appareil d'impression ou le copieur imprime au moins l'onglet de la feuille intercalaire avec une image d'impression.

19. Logiciel informatique, comportant des instructions et des données sous forme codée qui, après le chargement dudit logiciel, ordonnent à un système informatique d'exécuter les étapes mentionnées dans l'une des revendications 1 à 17.

20. Logiciel informatique selon la revendication 19, **caractérisé en ce que** ledit logiciel est mémorisé sur un support de mémorisation.

21. Procédé de génération de données pour imprimer un ensemble de feuilles intercalaires, dans lequel
au moins des premières données sont générées à l'aide d'un premier module de programme (10), lesquelles contiennent au moins des informations (14, 16) destinées au formatage d'éléments, à imprimer sur un onglet, d'au moins un ensemble de feuilles intercalaires,
les premières données générées étant mémorisées dans un premier fichier (12),
des données (110, 120) sont générées à l'aide du premier module de programme ou à l'aide d'un autre module de programme pour générer les éléments à imprimer, et sont mémorisées dans un autre fichier.

22. Ensemble pour générer des données en vue d'imprimer un ensemble de feuilles intercalaires,
ledit ensemble comportant un système de traitement de données qui met en oeuvre au moins un premier module de programme (10) qui génère au moins des premières données qui contiennent au moins des informations (14, 16) destinées au formatage d'éléments, à imprimer sur un onglet, d'au moins un ensemble de feuilles intercalaires,
le système de traitement de données mémorisant les premières données générées dans un premier fichier (12),
le premier module de programme ou un autre module de programme générant des données (110, 120) pour générer les éléments à imprimer, et les mémorisant dans un autre fichier.
